# EUROPÄISCHE PATENTSCHRIFT

(11) **EP 1 211 388 B1**
(45) Veröffentlichungstag und Bekanntmachung des Hinweises auf die Patenterteilung: **10.12.2003**
(21) Anmeldenummer: 01122911.9
(22) Anmeldetag: 25.09.2001
(51) Int. Cl.: F01L 1/34, F02D 41/22, F01L 1/356, F01L 13/00

(54) **Regelverfahren für den Stellantrieb eines variablen Ventiltriebes**
Control method for a variable valve drive
Procédé de régulation d'un dispositif d'entrainement variable pour soupape

(30) Priorität: 29.11.2000 DE 10059285
(43) Veröffentlichungstag der Anmeldung: 05.06.2002
(73) Patentinhaber: Bayerische Motoren Werke Aktiengesellschaft, 80809 München (DE)
(72) Erfinder: Schäfer, Martin, Dr., 82216 Maisach (DE)

(56) Entgegenhaltungen:
- EP-A- 0 821 141
- EP-A- 0 852 287
- WO-A-95/09298
- DE-C- 19 705 766
- US-A- 5 778 840

## Beschreibung

Die Erfindung betrifft ein Regelverfahren für den in Form eines Schneckengetriebes ausgebildeten, elektrischen Stellantrieb eines variablen Ventiltriebs gemäß dem Oberbegriff des Anspruchs 1.

Bei Verbrennungsmotoren wird angestrebt, die Höhe des Ventilhubes, insbesondere der Gaseinlassventile, für den Gaswechsel, betriebspunktabhängig zu verändern. Gelingt dies, so kann auf den Einsatz einer Drosselklappe weitgehend verzichtet werden, was zu einer Verbrauchsreduzierung führen würde, da dann die nachteiligen und verbrauchserhöhenden Drosselklappeneffekte eliminiert werden können.

Eine bekannte Ausführungsform eines sogenannten vollvariablen Ventiltriebs sieht zur Ventilhubhöhenverstellung eine Exzenterwelle vor, die von einem Bürstenmotor unter Zwischenschaltung eines Schneckengetriebes beaufschlagt wird. Das Schneckengetriebe besitzt konstruktionsbedingt eine sogenannte Lose, innerhalb der sich die Exzenterwelle ohne Betätigung des Stellantriebes geringfügig verdrehen lässt. Durch externe mechanische Störbeaufschlagung, beispielsweise induziert durch den Nockenwelleneinfluss, ist es möglich, dass die Lose des Getriebes durchfahren wird. Dies wiederum führt dazu, dass ein im Abtriebsbereich des Schneckengetriebes angeordneter Positionssensor auch ohne Beaufschlagung des Stellantriebs eine Positionsänderung meldet. Insbesondere führt die schnelle Änderung des Positionssignals durch den Anlagewechsel der Flanken im Getriebe zu einer Anregung des Regelkreises und in Folge davon zu einer Beaufschlagung des Stellantriebs. Dies resultiert insbesondere in einer erhöhten Stromaufnahme des Systems. Dokument US 5 778 840 zeigt eine Nockenwellenverstellung mit einem Schneckengetriebe.

Aufgabe der vorliegenden Erfindung ist es, Störungen im Regelkreis, die durch das Durchfahren der Getriebelose entstehen, zu unterdrücken, ohne gleichzeitig die Regeldynamik oder Regelgenauigkeit wesentlich einzuschränken.

Diese Aufgabe wird durch die im Anspruch 1 genannten Merkmale gelöst.

Der elektrische Stellantrieb wird in Abhängigkeit von einer mit einem Positions-Messwert ermittelten Regeldifferenz vorzugsweise pulsweitenmoduliert angesteuert. Zur Erzeugung eines zugehörigen Tastverhältnisses wird eine Regeldifferenz in einem Führungsfilter bewertet. Der Regler selbst ist dabei vorzugsweise mit digitaler Arbeitsweise ausgebildet. Die Regeldifferenz besteht beispielsweise aus einer Sollwertvorgabe der Motorsteuerung und einem rückgemeldeten Positions-Wert der Exzenterwelle. Da der messtechnisch erfasste Positions-Wert (Positions-Messwert) störgrößenbehaftet sein kann, ist eine diesbezügliche Plausibilitätsüberprüfung notwendig. Dazu wird aus dem Tastverhältnis der Pulsweitenmodulation ein mit dem Positions-Wert zusammenhängender Beobachterwert gebildet. Dieser Beobachterwert wird mit einem aus dem tatsächlichen Positions-Messwert gewonnenen Vergleichswert verglichen. Überschreitet die Abweichung zwischen dem Beobachterwert und dem Vergleichswert eine definierte Grenze oder Größe, so wird der Positions-Messwert selbst nicht akzeptiert. Das Dokument DE 19 705 766 offenbart ein Regelverfahren, bei dem Schätzwerte mit tatsächlichen Werken verglichen werden.

Der Positions-Messwert wird also anhand von verfügbaren Zustandsinformationen auf seine Plausibilität überprüft.

Da das Tastverhältnis etwa proportional zum Strom durch den elektrischen Stellantrieb bei dessen Stillstand und damit proportional zum vom Stellantrieb maximal abgebbaren Drehmoment ist, vergleicht man vorzugsweise die mit der zweiten Ableitung des Positions-Wertes zusammenhängenden Werte miteinander. Das mit dem Stellantrieb erzeugte Drehmoment bewirkt nämlich eine Beschleunigung 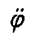 des Systems. Eine als Beobachterwert aus dem Tastverhältnis bestimmte, theoretische Beschleunigung 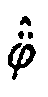 wird vorzugsweise mit einer tatsächlich ermittelten Beschleunigung 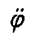 des Positions-Messwertes verglichen. Durch einen solchen Vergleich der Winkelbeschleunigungen können die Positions-Messwerte dann bewertet und derart gefiltert werden, dass alle erfassten Sensorwerte, die einer außerhalb der vorgegebenen Grenzen liegenden Winkelbeschleunigung entsprechen, als unplausibel verworfen werden.

Wenn die Abtastzeit des Reglers T_{A} größer ist, als jene des Positionssensors, dann erscheint es zudem zweckmäßig, einen Istwertfilter, der die nicht plausibel erscheinenden Positions-Messwerte herausfiltert, vor einer Mittelwertbildung, insbesondere zur Rauschunterdrückung des Signals, einzufügen. Wird im Rückführzweig des Regelverfahrens ein differenzierendes Übertragungsglied verwendet, so sollte der Istwert-Filter vor diesem Übertragungsglied angeordnet sein. Natürlich können im Rückführungszweig seriell oder parallel auch noch andere Übertragungsglieder, beispielsweise Proportionalglieder angeordnet sein. Eine Filterung kann in vielen Fällen jedoch auf den Rückführungszweig mit dem differenzierenden Übertragungsglied beschränkt bleiben, da sich gerade in diesem Glied die besonders schnellen und kurzzeitigen Schwankungen beim Durchfahren der Schneckengetriebelose nachteilig auswirken. Das differenzierende Glied ist aber gerade aus Gründen der Dynamik des Regelverfahren im Rückführzweig angeordnet, da damit eine hohe Stelldynamik erreicht werden kann.

Die Sollwertvorgabe zur Bildung der Regeldifferenz und Ansteuerung des Führungsfilters stammt vorzugsweise von einer digitalen Motorelektronik, welche die Ventilhubhöhe über eine Verstellung der Exzenterwelle betriebspunktmäßig anfordert.

Der Positions-Istwert wird insbesondere mittels eines Drehsensors erfasst, der an der Exzenterwelle angeordnet ist. Alle Informationen können zeitdiskret, in digitaler Form erfasst und weitergegeben werden.

Vorzugsweise kann zum Vergleich der Beobachter- und Vergleichswerte ein nichtlinearer Ist-Wertfilter verwendet werden. In einem solchen nichtlinearen Ist-Wertfilter können Maximal- und Minimalwerte für die Abweichung von Beobachterund Vergleichswert definiert werden. Ein Positions-Messwert wird dann akzeptiert, wenn sich die oben genannte Abweichung im Bereich zwischen dem Maximal- und dem Minimalwert befindet. Der Maximalwert kann dabei als Beobachterwert - wie oben beschrieben - aus dem Tastverhältnis bestimmt sein. Als Minimalwert wird beispielsweise eine Bremsbeschleunigung gewählt, die auftritt, wenn der Stellmotor unbestromt ausläuft.

Liegt ein Taktverhältnis von Null vor, so können beide Grenzwerte des nichtlinearen Ist-Wertfilters durch die positiven und negativen Absolutwerte dieses Minimalwertes gewählt werden.

Liegen während eines Lagereglerzykluses keine akzeptierten Positions-Meßwerte vor, dann wird im folgenden Zyklus von den alten Zustandsgrößen des Filters ausgegangen, insbesondere, wenn zu deren Berechnung der nicht lineare Filter vorgeschaltet war.

Um eine zweite Ableitung des Positions-Messwertes zu erreichen, wird vorzugsweise ein sogenanntes D²-Glied verwendet. Damit kann eine Differentiation erfasster Werte über die Bildung finiter Differenzen stattfinden. Die Beschleunigung ist auch über die Approximation durch eine kubische Funktion (Spline) über die letzten drei gültigen Punkte möglich.

Nachfolgend wird die Erfindung anhand von Ausführungsbeispielen und mit Bezug auf die beiliegenden Zeichnungen näher erläutert. Die beiliegenden Zeichnungen zeigen in
- Figur 1: ein Regeldiagramm einer Ausführungsform der vorliegenden Erfindung,
- Figur 2: ein vereinfachtes Regeldiagramm einer weiteren Ausführungsform der vorliegenden Erfindung und
- Figur 3: ein Blockschaltbild eines nichtlinearen Istwert-Filters zur Verwendung in den in Fig. 1 und 2 genannten Regelungen.

Vor der Beschreibung der konkreten Ausführungsbeispiele soll zunächst auf einige Grundlagen eingegangen werden.

Bei einem bekannten variablen Ventiltrieb werden auf Gaswechselventile einwirkende Kipphebel über eine Exzenterwelle verstellt (nicht dargestellt). Die Exzenterwelle wiederum wird über ein Schneckengetriebe angetrieben. Die Position der Exzenterwelle wird mit einem Sensor erfasst und zeitdiskret sowie in digitaler Form an einen digitalen Regler weitergegeben. Der Regler ist für die Positionierung der Exzenterwelle zuständig und erhält eine Sollwert-Vorgabe von einer digitalen Motor-Elektronik. Ein im Regler enthaltener Führungsfilter bewertet dabei die Regeldifferenz zwischen der Sollwert-Vorgabe und der messtechnisch erfaßten IstPosition der Exzenterwelle (Positions-Messwert) und generiert ein Tastverhältnis für eine pulsweitenmodulierte Ansteuerung, mit welcher der elektrische Stellantrieb des Schneckengetriebes beaufschlagt wird.

Aus Gründen der Regeldynamik befindet sich im Rückführzweig einer herkömmlichen Regelung ein differenzierendes Glied. Dies führt dazu, dass schnelle Störungen im Positions-Messwert zu einer signifikanten Reaktion des Reglers führen, obwohl dies durch die Amplitude der Störung nicht gerechtfertigt ist. Insbesondere impulsförmige Störungen führen dabei zu einer kurzzeitigen, im Vorzeichen wechselnden Bestromung des Stellantriebs, was zu einer sehr hohen Belastung des elektrischen Systems führt.

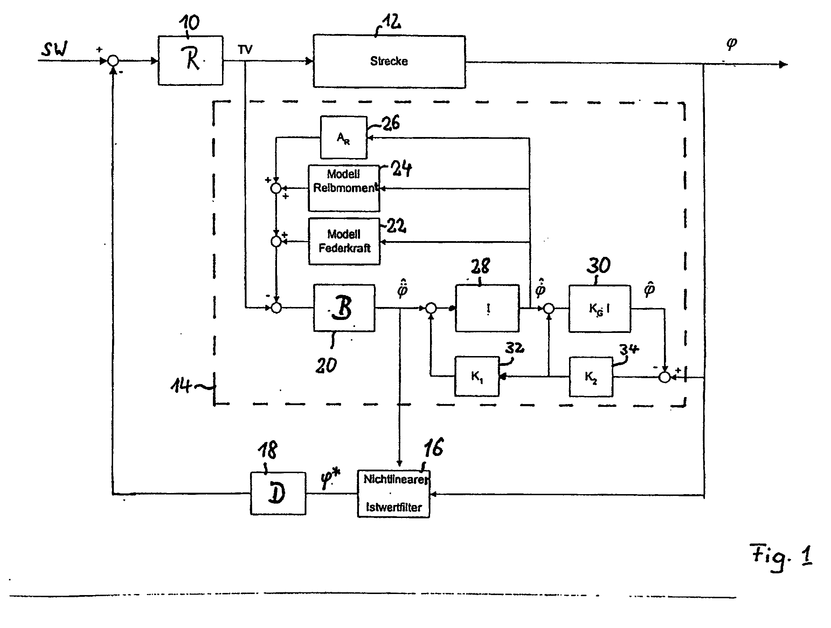

Gemäß Figur 1 liefert eine digitale Motorelektronik eine Sollwert-Vorgabe SW, die zusammen mit einer später noch zu erläuternden Information eine Regeldifferenz ergibt, welche als Eingangssignal eines Führungsfilters R (Bezugszeichen 10) dient. Der Führungsfilter 10 bewertet die Regeldifferenz und generiert eine pulsweitenmodulierte Ansteuerung mit einem Tastverhältnis TV. Dieses Signal wird an den nicht dargestellten elektrischen Stellantrieb in der Regelstrecke 12 weitergegeben. Der elektrische Stellantrieb verstellt über ein Schneckengetriebe die nicht dargestellte Exzenterwelle. An der Exzenterwelle, also abtriebsseitig des Schneckengetriebes, ist ein Sensor angeordnet, der ein Messsignal generiert und einen entsprechenden Positions-Messwert ϕ ausgibt. Dieser Messwert ϕ wird in einem Rückführungszweig über ein differenzierendes Glied 18 zur Bildung der Regeldifferenz zurückgeführt. Das differenzierende Glied 18 erzeugt dabei aus dem Positions-Messwert eine Sprungantwort, deren Charakteristik in gewünschter Weise festgelegt werden kann.

Aufgrund der Lose des Schneckengetriebes ist der Positions-Messwert *ϕ* jedoch mit Störgrößen behaftet. Der Eingriff der Nockenwelle führt über Anlage- und Reibungskräfte der Zwischenhebel nämlich zu einem Störmoment auf die Exzenterwelle. Diese dynamische Belastung reicht in einigen Betriebspunkten aus, um das Vorzeichen des Drehmoments an der Exzenterwelle kurzzeitig aufzuheben. Dies führt zu Flankenwechsel im Schneckengetriebe, wobei die Störgröße erwartungsgemäß Störungen in der ersten Motorordnung und ihren Harmonischen zeigt.

Zur Unterdrückung dieser Störungen wird aus der vorliegend einzig bekannten Zustandsgröße, nämlich dem Tastverhältnis TV, welches proportional ist zum Ansteuerstrom des elektrischen Stellantriebs und damit zum von diesem generierten Moment beim Stillstand des Stellmotors, über ein Beobachtermodell 14 eine Beobachtergröße 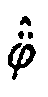 erzeugt, die mit der zweiten Ableitung des Positions-Wertes zusammenhängt. Die Beobachtergröße 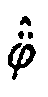 wird dann in einem nichtlinearen Istwert-Filter 16 auf den genauer später eingegangen wird, mit einem aus dem Positions-Messwert ϕ ermittelten Vergleichswert verglichen und über die Abweichung beider Werte voneinander eine Plausibilitätsprüfung, wie nachfolgend noch erläutert, durchgeführt. Grundlage hierfür ist die Tatsache, dass die mittels eines Modells ermittelte Beobachtergröße 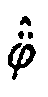 mit dem aus einem nicht störgrößenbehafteten Positions-Messwert gewonnenen Vergleichswert im wesentlichen übereinstimmt.

Im Folgenden wird der vollständige Beobachter aus Figur 1 erläutert, welchermit dem mit Bezugsziffer 14 bezeichneten Kästchen dargestellt ist. Das Tastverhältnis TV wird einem Proportionalglied 20 zugeführt, der daraus über die an sich bekannte Proportionalität von Tastverhältnis TV zu Strom und Motormoment den Beobachterwert 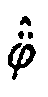 generiert. Über einen Integrator 28 wird aus dem Beobachterwert 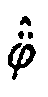 eine Größe 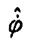 erzeugt, die einer Änderung des Positions-Wertes entspricht. Mit dieser Größe 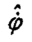 wird über drei zusätzliche Modelle, nämlich den Einfluss der Federkraft 22, den Einfluss einer Reibkraft 24, sowie Ankerrückwirkung A_{R} 26 und über einen weiteren Integrator 30 ein Positions-Wert ϕ̂ geschätzt. Mit der Differenz von tatsächlich ermittelten Positions-Messwert ϕ und geschätztem Positions-Wert ϕ̂ wird dann über Korrekturparameter K₁ und K₂ (Bezugsziffern 32 und 34) wiederum eine Korrektur für 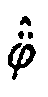 und 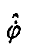 herbeigeführt, um eine bleibende Abweichung des Beobachters vom realen Winkel zu unterdrücken.

Im Idealfall, also wenn die verschiedenen Modelle 20, 22, 24 und 26 die Regelstrecke 12 ideal abbilden, könnten die beiden Parameter K₁ und K₂ mit Null gewählt werden.

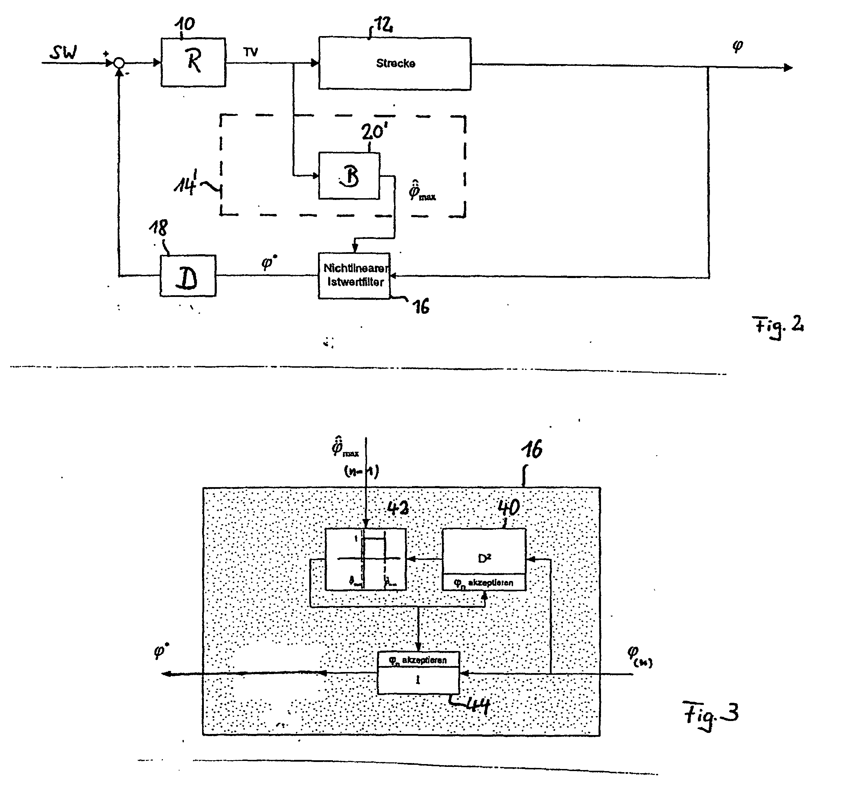

Die Beobachtergröße 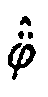 wird dann in dem nichtlinearen Istwert-Filter 16 mit der zweiten Ableitung des Positions-Messwertes ϕ, also 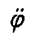 verglichen. Aus der Abweichung beider Größen wird dann darüber entschieden, ob der Positions-Messwert akzeptiert oder verworfen wird. Ein Beispiel für ein solches Istwert-Filter ist in Fig. 3 angegeben. Bevor jedoch näher hierauf eingegangen wird, soll zunächst eine vereinfachte Version eines Beobachtermodells angegeben werden.

Das Beobachtermodell aus Fig. 1 ist an sich recht komplex und daher auch rechenaufwendig. In dem in Figur 2 dargestellten vereinfachten Beobachtermodell 14' wurden daher im Wesentlichen die Korrekturmodelle 22, 24, 26, 28 und 30 weggelassen und lediglich das Proportionalglied 20 beibehalten. Dieses Proportionalglied enthält im wesentlichen Motorkonstanten.

Der aus dem Tastverhältnis gewonnene Wert 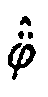 , der im wesentlichen der zweiten Ableitung des Positions-Wertes entspricht stellt nun den Maximal-Wert für eine akzeptable Beschleunigung dar, da weder die Ankerrückwirkung durch die Winkelgeschwindigkeit des Stellmotors, noch die Reib- und Federkräfte berücksichtigt sind. Insofern zeigt die Reglerstruktur aus Figur 2 ein vereinfachtes Filterkonzept, das im Wesentlichen auf die komplexe Beobachterstruktur verzichtet.

Aus dem Tastverhältnis wird also mit dem Proportionalglied 20' lediglich die Größe 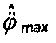 gebildet. Diese Größe wird dem nichtlinearen Istwert-Filter 16 als 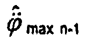 zur Verfügung gestellt. Der Vorteil dieses Verfahrens ist der geringe benötigte Rechenaufwand.

Der nichtlineare Istwert-Filter 16 in Figur 3 arbeitet mit einer unteren Grenzen 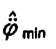 und der oberen Grenze 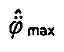 für die Beschleunigung. Ferner ist ein D²-Glied 40 für eine zweifache Differentiation des Positions-Messsignals ϕ vorgesehen. Dabei werden die beiden letzten gültigen sowie der aktuelle Wert des Positions-Messwertes ϕ benötigt. Die Differentiation kann über eine Bildung finiter Differenzen stattfinden. Für die Differenzbildung ist jeweils der tatsächliche Zeitabstand zwischen den verwendeten Werte von *ϕ*ₙ zu verwenden. Für die zweite Differenz gilt dann der Abstand der Mittenpunkte zwischen den gültigen Abtastzeitpunkten. Somit bekommt man am Ausgang des D²-Gliedes 40 die zweite Ableitung des Positions-Messwertes. Diese Information wird in das nichtlineare Glied 42 eingespeist. Im nichtlinearen Glied ist eine Abbildungsfunktion definiert, wonach zwischen den beiden Grenzen 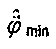 und 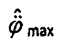 der Abbildungswert 1 ist. Außerhalb dieser Grenzen ist der Abbildungswert Null. Als untere Grenze 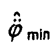 wird die Bremsbeschleunigung gewählt, die auftritt, wenn der Stellmotor unbestromt in eine Richtung ausläuft. Die Bremsbeschleunigung kann von der Position und der Drehrichtung abhängig sein. Ist das Tastverhältnis TV Null, dann werden die Grenzen durch +/- | 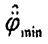 | gebildet.

Liegt nun der Wert der zweiten Ableitung des Positions-Messwertes, also 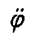 innerhalb der Grenzen von 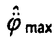 und 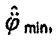 , so wird der gemessene Positions-Wert *ϕ* akzeptiert. Dies wird an das D²-Glied 40 sowie an einen Schalter 44 weitergeleitet. Im D²-Glied wird ein akzeptierter Positions-Wert für den nächsten Differentiationsschritt verwendet. Ein nicht akzeptierter Positionswert dagegen wird nicht für einen nächsten Differentiationsschritt verwendet.

Im Schalter 44 wird ein Positions-Messwert dann durchgeschaltet, wenn er akzeptiert ist. Wird er nicht akzeptiert, so wird kein Wert an die nachfolgenden Glieder weitergereicht. Ein nachgeschaltetes Glied wird den vorhergehenden Wert ausgeben. Dies entspricht dem Einfügen eines Halteglieds vor dem Summenpunkt zur Bildung der Regeldifferenz. Sind sogenannte D-Glieder (Differenzierglieder) eingefügt, so können sie die Zeitdifferenz aufeinanderfolgender Positionswerte berücksichtigen. Dies ergibt die Menge ϕ*** der akzeptierten Positions-Messwerte.

Insbesondere lässt sich die vorliegende Erfindung aufgrund der Eigenart der Störgrößen im variablen Ventiltriebsystem in besonderer Weise anwenden. Diese Eigenart ist bestimmt durch den Eingriff der Nockenwelle und die aufgrund der Existenz der Getriebelosen des Schneckenantriebs verursachten Reaktion. Die Amplitude der Störung ist dabei begrenzt. Die Größe der Störung ist kleiner oder gleich der benötigten Regelgüte, d.h. es ist nicht notwendig, eine solche Störung auszuregeln. Die Geschwindigkeit, mit der das Signal verändert wird, ist wesentlich größer als es dem momentanen Systemzustand entspricht. Die ursprüngliche Flankenanlage wird in der Regel nach erfolgtem Nockeneingriff wieder angenommen.

Das vorliegende Verfahren erlaubt insgesamt eine Unterdrückung der Störungen im Regelkreis eines variablen Ventiltriebs mit Schneckengetriebe, ohne gleichzeitig die Regeldynamik oder Regelgenauigkeit wesentlich einzuschränken.

## Patentansprüche

1. Regelverfahren für den in Form eines Schneckengetriebes ausgebildeten elektrischen Stellantrieb eines variablen Ventiltriebes, bei dem ein Positions-Wert einer Exzenterwelle mit einem Sensor erfasst wird (Positions-Messwert), eine Regeldifferenz unter Verwendung des Positions-Messwertes in einem Rückführungszweig erzeugt wird und der elektrische Stellantrieb in Abhängigkeit von der Regeldifferenz angesteuert wird,
**dadurch gekennzeichnet,**
**dass** aus einem Tastverhältnis einer Pulsweitenmodulation ein mit dem Positions-Wert zusammenhängender Beobachterwert gebildet wird, dass der Beobachterwert mit einem aus dem Positions-Messwert gebildeten Vergleichswert verglichen wird und dass der erfasste Positions-Messwert dann nicht akzeptiert wird, wenn die Abweichung des Beobachterwertes von dem Vergleichswert eine definierte Grenze überschreitet.

2. Regelverfahren nach Anspruch 1,
**dadurch gekennzeichnet,**
**dass** der Beobachterwert der Beschleunigung des Positions-Wertes entspricht, welcher aus einem Beobachtermodell gewonnen wird, und dass der Vergleichswert der zweiten Ableitung des Positions-Messwertes entspricht.

3. Regelverfahren nach Anspruch 1 oder 2,
**dadurch gekennzeichnet,**
**dass** zur Bildung der Regeldifferenz eine Sollwertvorgabe verwendet wird, die von einer digitalen Motorelektronik stammt.

4. Regelverfahren nach einem der Ansprüche 1 bis 3,
**dadurch gekennzeichnet,**
**dass** der Positions-Messwert mittels eines Drehwinkelsensors an der Exzenterwelle erfaßt wird.

5. Regelverfahren nach einem der vorhergehenden Ansprüche,
**dadurch gekennzeichnet,**
**dass** alle Informationen zeitdiskret, in digitaler Form erfasst und weitergegeben werden.

6. Regelverfahren nach einem der vorhergehenden Ansprüche,
**dadurch gekennzeichnet,**
**dass** sich in dem Rückführungszweig ein differenzierendes Glied befindet.

7. Regelverfahren nach einem der vorhergehenden Ansprüche,
**dadurch gekennzeichnet,**
**dass** die Regelglieder digital aufgebaut sind.

8. Regelverfahren nach einem der vorhergehenden Ansprüche,
**dadurch gekennzeichnet,**
**dass** die Abtastung des Positionssensors mit einer höheren Rate als die Aktualisierung der übrigen Reglergrößen durchgeführt wird.

9. Regelverfahren nach einem der vorhergehenden Ansprüche,
**dadurch gekennzeichnet,**
**dass** beim Vergleich von Beobachterwert und Vergleichswert ein nichtlinearer Istwertfilter verwendet wird.

10. Regelverfahren nach Anspruch 9,
**dadurch gekennzeichnet,**
**dass** im nichtlinearen Ist-Wertfilter ein Maximalwert und ein Minimalwert definiert sind und der Positions-Messwert dann akzeptiert wird, wenn sich der Vergleichswert innerhalb obiger Werte befindet.

11. Regelverfahren nach einem der Ansprüche 9 oder 10,
**dadurch gekennzeichnet,**
**dass** der Maximalwert in Form des Beobachterwertes aus dem Tastverhältnis bestimmt wird.

12. Regelverfahren nach einem der Ansprüche 9 bis 11,
**dadurch gekennzeichnet,**
**dass** zumindest bei definierten Verfahrensituationen als Minimalwert die Bremsbeschleunigung gewählt wird, die auftritt, wenn der Stellmotor unbestromt ausläuft.

13. Regelverfahren nach einem der Ansprüche 9 bis 12,
**dadurch gekennzeichnet,**
**dass** bei einem Taktverhältnis von Null die Grenzen durch den positiven und negativen Absolutwert des Minimalwertes bestimmt werden.

14. Regelverfahren nach einem der vorhergehenden Ansprüche,
**dadurch gekennzeichnet,**
**dass** in nachgeschalteten Regelgliedern nicht akzeptierte Positions-Messwerte bei der Bildung der Regeldifferenz durch den letzten gültigen Positions-Wert ersetzt werden.

15. Regelverfahren nach einem der vorhergehenden Ansprüche,
**dadurch gekennzeichnet,**
**dass** ein D²-Glied für eine zweifache Differentiation von gültigen Positions-Messsignals verwendet ist.

16. Regelverfahren nach Anspruch 15,
**dadurch gekennzeichnet,**
**dass** die Differentiation über die Bildung finiter Differenzen stattfindet.

17. Regelverfahren nach einem der vorhergehenden Ansprüche 2 bis 14,
**dadurch gekennzeichnet,**
**dass** die zweiten Ableitungen durch Approximation einer kubischen Funktion über die letzten drei gültigen Punkte bestimmt wird.

## Claims

1. A control method for the electrical positioning drive for a variable valve drive configured in the form of a worm drive in which the position value of an eccentric shaft is detected using a sensor (measured positional value), a control difference is generated using the measured positional value in a return branch and the electrical positioning drive is controlled in dependence upon the control difference, **characterised in that** from the sampling ratio of a pulse width modulation, an observer value is formed, connected to the measured positional value, that the observer value is compared with a comparison value formed from the measured positional value and that the measured positional value captured is not accepted if the deviation of the observer value from the comparison value exceeds a defined limit

2. A control method according to claim 1, **characterised in that** the observer value corresponds to the acceleration of the positional value, which is obtained from an observer model, and that the comparison value corresponds to the second derivative of the measured positional value.

3. A control method according to claim 1 or claim 2, **characterised in that** a prescribed target value is used to form the control difference, which is derived from digital electronics.

4. A control method according to one of the claims 1 to 3, **characterised in that** the measured positional value is captured using an angle of rotation sensor on the eccentric shaft.

5. A control method according to one of the foregoing claims, **characterised in that** all the information is captured in digital form and transmitted at discrete time intervals.

6. A control method according to one of the foregoing claims, **characterised in that** a differentiating element is present in the return branch.

7. A control method according to one of the foregoing claims, **characterised in that** the control elements are digitally constructed.

8. A control method according to one of the foregoing claims, **characterised in that** the sampling of the position sensor is carried out at a higher speed than the updating of the other control values.

9. A control method according to one of the foregoing claims, **characterised in that** a non-linear actual value filter is used in the comparison of the observer value and the comparison value.

10. A control method according to claim 9, **characterised in that** a maximum value and a minimum value are defined in the non-linear actual value filter and the measured positional value is accepted if the comparison value lies between the above values.

11. A control method according to claim 9 or claim 10, **characterised in that** the maximum value is determined in the form of the observer value from the sampling ratio.

12. A control method according to one of the claims 9 to 11, **characterised in that** as the minimum value, at least under defined situations in the method, the braking acceleration is selected, which arises when the positioning motor runs down without current.

13. A control method according to one of the claims 9 to 12, **characterised in that** for a sampling ratio of Null the limits are set by the positive and negative absolute values of the minimum value.

14. A control method according to one of the foregoing claims, **characterised in that** in series connected control elements, non-accepted measured positional values are replaced by the last valid positional value in the formation of the control difference.

15. A control method according to one of the foregoing claims, **characterised in that** a D² element is used for a double differentiation of valid measured positional signals.

16. A control method according to claim 15, **characterised in that** the differentiation takes place via the formation of finite differences.

17. A control method according to one of the foregoing claims 2 to 14, **characterised in that** the second derivatives are determined by approximation of a cubic function using the last three valid points.

## Revendications

1. Procédé de régulation pour le mécanisme de commande électrique sous la forme d'un engrenage à vis sans fin d'un dispositif d'entraînement variable pour soupape, dans lequel une valeur de position d'un arbre à excentrique est enregistrée à l'aide d'un capteur (valeur de position mesurée), une différence de régulation est générée grâce à l'utilisation de la valeur de position mesurée dans une branche de rétroaction et le mécanisme de commande électrique est commandé en fonction de la différence de régulation,
**caractérisé en ce qu'**
à partir d'un rapport cyclique d'une modulation de largeur d'impulsions, une valeur d'observation liée à la valeur de position est formée, **en ce que** la valeur d'observation est comparée avec une valeur de comparaison formée à partir de la valeur de position mesurée et **en ce que** la valeur de position mesurée enregistrée n'est ensuite pas acceptée lorsque l'écart entre la valeur d'observation et la valeur de comparaison dépasse une limite donnée.

2. Procédé de régulation selon la revendication 1,
**caractérisé en ce que**
la valeur d'observation correspond à l'accélération de la valeur de position, qui est issue d'un modèle d'observation, et **en ce que** la valeur de comparaison correspond à la dérivée seconde de la valeur de position mesurée.

3. Procédé de régulation selon la revendication 1 ou 2,
**caractérisé en ce qu'**
une indication de valeur de consigne est utilisée pour former la différence de régulation, ladite indication de valeur de consigne étant issue d'une électronique de moteur numérique.

4. Procédé de régulation selon l'une quelconque des revendications 1 à 3,
**caractérisé en ce que**
la valeur de position mesurée est enregistrée au moyen d'un capteur d'angle de rotation au niveau de l'arbre à excentrique.

5. Procédé de régulation selon l'une quelconque des revendications précédentes,
**caractérisé en ce que**
toutes les informations sont enregistrées et transmises en temps discret et sous forme numérique.

6. Procédé de régulation selon l'une quelconque des revendications précédentes,
**caractérisé en ce qu'**
un organe de différenciation se trouve dans la branche de rétroaction.

7. Procédé de régulation selon l'une quelconque des revendications précédentes,
**caractérisé en ce que**
les organes de régulation sont configurés sous forme numérique.

8. Procédé de régulation selon l'une quelconque des revendications précédentes,
**caractérisé en ce que**
l'échantillonnage du capteur de position est réalisé avec une fréquence plus élevée que l'actualisation des autres grandeurs de régulation.

9. Procédé de régulation selon l'une quelconque des revendications précédentes,
**caractérisé en ce que**
lors de la comparaison entre la valeur d'observation et la valeur de comparaison, un filtre des valeurs réelles non linéaire est utilisé.

10. Procédé de régulation selon la revendication 9,
**caractérisé en ce que**
dans le filtre des valeurs réelles non linéaire sont définies une valeur maximale et une valeur minimale, et **en ce que** la valeur de position mesurée est alors acceptée lorsque la valeur de comparaison se trouve parmi ces valeurs.

11. Procédé de régulation selon l'une des revendications 9 ou 10,
**caractérisé en ce que**
la valeur maximale est déterminée à partir du rapport cyclique sous la forme de la valeur d'observation.

12. Procédé de régulation selon l'une quelconque des revendications 9 à 11,
**caractérisé en ce qu'**
au moins pour des situations de procédé définies, l'accélération de freinage, qui intervient lorsque le moteur de commande non alimenté s'arrête, est choisie en tant que valeur minimale.

13. Procédé de régulation selon l'une quelconque des revendications 9 à 12,
**caractérisé en ce que**
lorsque le rapport cyclique est égal à zéro, les limites sont déterminées par la valeur absolue positive et négative de la valeur minimale.

14. Procédé de régulation selon l'une quelconque des revendications précédentes,
**caractérisé en ce que**
dans des organes de régulation activés ultérieurement, les valeurs de position mesurées non acceptées sont remplacées lors de la formation de la différence de régulation par les dernières valeurs de position valides.

15. Procédé de régulation selon l'une quelconque des revendications précédentes,
**caractérisé en ce qu'**
un organe D² est utilisé pour une différenciation double de signaux de mesure de position valides.

16. Procédé de régulation selon la revendication 15,
**caractérisé en ce que**
la différenciation se produit par le biais de la formation de différences finies.

17. Procédé de régulation selon l'une quelconque des revendications précédentes 2 à 14,
**caractérisé en ce que**
les dérivées secondes sont déterminées par une approximation d'une fonction cubique sur les trois derniers points valides.
